# EUROPÄISCHE PATENTSCHRIFT

(11) **EP 3 367 852 B1**
(45) Veröffentlichungstag und Bekanntmachung des Hinweises auf die Patenterteilung: **09.10.2019**
(21) Anmeldenummer: 16787446.0
(22) Anmeldetag: 26.10.2016
(51) Int. Cl.: A47J 27/16, A47J 27/04

(54) **VORRICHTUNG UND VERFAHREN ZUM AUFBEREITEN VON LEBENSMITTELN**
DEVICE AND METHOD FOR PROCESSING FOODSTUFFS
DISPOSITIF ET PROCÉDÉ DE PRÉPARATION DE DENRÉES ALIMENTAIRES

(30) Priorität: 27.10.2015 DE 102015221004
(43) Veröffentlichungstag der Anmeldung: 05.09.2018
(73) Patentinhaber: Carogusto AG, 8580 Amriswil (CH)
(72) Erfinder: MEDERER, Herbert, 90768 Fürth (DE)
(74) Vertreter: Rau, Schneck & Hübner Patentanwälte Rechtsanwälte PartGmbB
(86) Internationale Anmeldenummer: PCT/EP2016/075811
(87) Internationale Veröffentlichungsnummer: WO 2017/072180

(56) Entgegenhaltungen:
- WO-A1-02/096252
- DE-A1- 2 851 918
- US-A- 3 139 343
- US-A- 5 442 997

## Beschreibung

Die vorliegende Patentanmeldung nimmt die Priorität der deutschen Patentanmeldung DE 10 2015 221 004.9 in Anspruch, deren Inhalt durch Bezugnahme hierin aufgenommen wird.

Die Erfindung betrifft eine Vorrichtung und ein Verfahren zum Aufbereiten von Lebensmitteln.

Die DE 10 2014 202 702 A1 offenbart eine Vorrichtung zum Zubereiten von Speisen. Mittels einer Rühr-/Erwärmungs-Einheit werden die Speisen mechanisch gerührt und erwärmt. Dafür ist ein aufwendiger Rührantrieb erforderlich.

Weitere Vorrichtungen zum Zubereiten von Speisen sind bekannt aus US 5,442,997 A, DE 28 51 918 A1, WO 02/096 252 A1 und US 3,139,343 A.

Es ist eine Aufgabe der vorliegenden Erfindung, das, insbesondere automatisierte, Aufbereiten von Lebensmitteln in einem Gefäß zu vereinfachen.

Diese Aufgabe wird durch eine Vorrichtung mit den in Anspruch 1 angegebenen Merkmalen und durch ein Verfahren mit den in Anspruch 12 angegebenen Merkmalen gelöst. Der Kern der Erfindung besteht darin, dass über eine Dampfsonde einer Dampfzuführeinheit Dampf aus einer Dampferzeugungseinheit in das Gefäß zugeführt werden kann. Dazu weist die Dampfsonde mindestens eine Dampfabgabeöffnung auf. Die Dampfsonde ist insbesondere rohrförmig ausgeführt. Die Dampfzuführeinheit weist einen Dampfsonden-Hubantrieb auf, um eine Hubbewegung der Dampfsonde mit einer Hubgeschwindigkeit entlang einer Hubachse zu ermöglichen.

Die Hubachse ist linear. Mittels der Hubbewegung durch den Dampfsonden-Hubantrieb kann die Dampfsonde mit der mindestens einen Dampfabgabeöffnung in die Lebensmittel im Gefäß eintauchen. Zum Zuführen der Dampfsonde in das Gefäß kann die Hubbewegung mit einer ersten Hubgeschwindigkeit erfolgen. Die erste Hubgeschwindigkeit kann eine Maximalgeschwindigkeit sein, die der Dampfsonden-Hubantrieb ermöglicht und/oder aus Sicherheitsgründen zulässt. Dadurch, dass die erste Hubgeschwindigkeit groß ist, kann eine Zuführung der Dampfsonde in das Gefäß mit reduziertem Zeitaufwand erfolgen. Die erste Hubgeschwindigkeit beträgt beispielsweise zwischen 0,1 bis 5 m/s, insbesondere 0,5 bis 2,5 m/s und insbesondere etwa 1 m/s. Die Verlagerung mit der ersten Hubgeschwindigkeit wird auch als Leerhub bezeichnet. Das bedeutet, dass während des Leerhubs keine Drehbewegung der Dampfsonde erfolgt. Während der Lebensmittelzubereitung kann die Dampfsonde mit einer zweiten Hubgeschwindigkeit auf und ab bewegt werden. Dadurch kann die Durchmischung der Lebensmittel zusätzlich verbessert werden. Um eine möglichst homogene Durchmischung der Lebensmittel zu erreichen und/oder eine Beschädigung der Lebensmittel auszuschließen, ist die zweite Hubgeschwindigkeit vergleichsweise klein, insbesondere kleiner als die erste Hubgeschwindigkeit. Die zweite Hubgeschwindigkeit beträgt insbesondere höchstens 0,1 m/s, insbesondere höchstens 0,05 m/s und insbesondere höchstens 0,01 m/s. Es ist auch möglich, während der Lebensmittelzubereitung auf eine Hubbewegung zu verzichten. Die zweite Hubgeschwindigkeit ist dann gleich null. Es ist möglich, die Hubgeschwindigkeiten, insbesondere die zweite Hubgeschwindigkeit während der Speisenzubereitung veränderlich einzustellen. Beispielsweise können in einer Steuerungseinheit Hubgeschwindigkeitsprofile hinterlegt sein, sodass während eines Speisenzubereitungszyklus die zweite Hubgeschwindigkeit veränderlich ist. Eine Dampfzufuhr unmittelbar in die Lebensmittel ist ermöglicht. Eine aufwendige Kinematik zum Rühren der Lebensmittel ist gemäß der vorliegenden Erfindung entbehrlich. Insbesondere dient Wasserdampf, der in der Dampferzeugungseinheit erzeugt wird, zum Aufbereiten der Lebensmittel. Der Dampf kann insbesondere mit einem erhöhten Druck dem Gefäß zugeführt werden. Der Dampf dient zum Erwärmen der Lebensmittel, wie beispielsweise Nudelgericht mit Soße. Auch andere Lebensmittel können mit der Vorrichtung aufbereitet werden. Der Dampf bewirkt eine Vermischung, insbesondere ein Rühren der Lebensmittel, in dem Gefäß.

Die Vorrichtung, die einen Dampfsonden-Drehantrieb für eine Drehbewegung der Dampfsonde um die Hubachse aufweist, ermöglicht eine verbesserte Vermischung der Lebensmittel. Durch die Drehbewegung der Dampfsonde um die Hubachse mit einer Drehgeschwindigkeit erfolgt ein mechanisches Mischen der Lebensmittel in dem Gefäß. Die Drehgeschwindigkeit ist insbesondere variabel einstellbar. Insbesondere ist es möglich, während des Betriebs der Vorrichtung, also während der Zubereitung der Speisen, die Drehgeschwindigkeit zu verändern. Die Drehgeschwindigkeit beträgt insbesondere zwischen 1 min-1 bis 100 min-1, insbesondere 5 min-1 bis 50 min-1 und insbesondere zwischen 10 min-1 und 30 min-1. Insbesondere ist der Dampfsonden-Drehantrieb unabhängig von dem Dampfsonden-Hubantrieb ausgeführt. Dadurch ist gewährleistet, dass eine Hubbewegung der Dampfsonde unabhängig von einer Drehbewegung der Dampfsonde um die Hubachse ausführbar ist. Während der Speisenzubereitung ist eine beliebige Überlagerung der Hubbewegung und der Drehbewegung der Dampfsonde möglich. Es ist möglich, verschiedene Bewegungsprofile in einer Steuerung der Vorrichtung zu hinterlegen, um in Abhängigkeit der zuzubereitenden Speisen ein zuvor ermitteltes, optimales Mischergebnis zu erzielen. Ein Bewegungsprofil kann beispielsweise die Anzahl der Hübe, die Hubgeschwindigkeit, die Drehgeschwindigkeit und/oder die Drehrichtung umfassen. Mittels des Dampfsonden-Drehantriebs ist die Drehbewegung um die Hubachse in beiden Richtungen möglich. Die Kinematik der Vorrichtung ist vereinfacht. Um das mechanische Mischen der Lebensmittel zu verbessern, ist es vorteilhaft, wenn die Dampfsonde mindestens ein Mischelement aufweist, das exzentrisch zur Hubachse angeordnet ist. Ein derartiges Mischelement kann beispielsweise ein freier Endabschnitt der Dampfsonde sein.

Eine Vorrichtung gemäß Anspruch 2 ermöglicht eine Dampfzuführung an unterschiedlichen Positionen, insbesondere bezogen auf die Hubachse. Dadurch, dass die Dampfabgabeöffnungen an unterschiedlichen Höhenpositionen an der Dampfsonde angebracht sind, können die Lebensmittel an verschiedenen Höhenpositionen mit Dampf beaufschlagt werden. Beispielsweise ist es dadurch möglich, Soße, die im Bodenbereich des Gefäßes angeordnet ist, mittels erster Dampfabgabeöffnungen und Nudeln, die oberhalb der Soße im Gefäß angeordnet sind, zuzuführen. Die Dampfzuführung kann hinsichtlich des Zuführortes sehr gezielt erfolgen. Eine Hubbewegung der Dampfsonde während der Dampfzuführung ist entbehrlich. Die Kinematik für die Verlagerung der Dampfsonde ist vereinfacht. Insbesondere gibt die Anzahl und/oder die Querschnittsfläche der Dampfabgabeöffnungen ein Maß für die zugeführte Energie vor. Es ist also möglich, in Abhängigkeit der zu erwärmenden Speisen die zugeführte Energiemenge zu steuern. Beispielsweise ist für die Erwärmung der im Bodenbereich angeordneten Soße vergleichsweise mehr Energie in Form von Dampf erforderlich als für die darüber angeordneten Nudeln. Dies kann besonders unkompliziert dadurch realisiert werden, dass im Bereich der Soße mehr Dampfabgabeöffnungen vorgesehen sind als in dem Bereich der Nudeln.

Eine Vorrichtung gemäß Anspruch 3 ermöglicht eine gezielte Dampfzuführung. Wesentlich ist, dass die Dampfsonde mehrere freie Endabschnitte aufweist, also insbesondere genau zwei, insbesondere genau drei, insbesondere genau vier oder mehr als vier, insbesondere höchstens acht. Die freien Endabschnitte werden als Lanzen bezeichnet. Über jeden der mehreren freien Endabschnitte der Dampfsonde kann Dampf gezielt den Lebensmitteln zugeführt werden. Jeder Endabschnitt kann eine oder mehrere Dampfabgabeöffnungen aufweisen. Die fingerartigen Endabschnitte können sich ausgehend von einem zentralen Sondenrohr über einen Verteilerabschnitt erstrecken.

Eine Vorrichtung gemäß Anspruch 4 ermöglicht ein zuverlässiges Verschließen des Gefäßes während der Dampfzuführung. Eine dafür vorgesehene Gefäßabdeckung ist an der Dampfsonde befestigt. Das bedeutet, dass eine Hubbewegung der Dampfsonde unmittelbar eine Hubbewegung der Gefäßabdeckung bewirkt. Durch das abdichtende Anliegen der Gefäßabdeckung an dem Gefäß ist gewährleistet, dass eine Verunreinigung durch Lebensmittelspritzer verhindert ist. Dadurch, dass die Gefäßabdeckung an der Dampfsonde befestigt ist und eine Relativbewegung zwischen der Dampfsonde und der Gefäßabdeckung nicht erfolgt, ist die Abdichtung der Gefäßabdeckung gegenüber der Dampfsonde wesentlich vereinfacht. Es kann eine statische Dichtung verwendet werden. Die Verwendung einer dynamischen Dichtung ist entbehrlich.

Eine Vorrichtung gemäß Anspruch 5 ermöglicht eine definierte Anordnung und Halterung für das Gefäß. Die automatisierte Dampfzuführung über die Dampfsonde ist vereinfacht. Vorteilhaft ist ein Gefäß-Verlagerungsantrieb, der eine Verlagerung des Gefäßes zwischen einer Abgabe-/Entnahmeposition und einer Vorbereitungsposition verlagerbar ist. In der Abgabe-/Entnahmeposition ist es einem Bediener der Vorrichtung, insbesondere einem Kunden, vereinfacht, ein Gefäß in die Gefäß-Halteeinheit vor der Aufbereitung abzugeben und nach der Aufbereitung wieder zu entnehmen. Von der Vorbereitungsposition kann die Vorrichtung in eine Lebensmittelaufbereitungsposition verändert werden, indem die Dampfsonde mittels des Dampfsonden-Hubantriebs derart nach unten verlagert wird, dass die Dampfsonde die Lebensmittel in dem Gefäß erwärmen kann. In der Lebensmittelaufbereitungsposition kann besonders unkompliziert die Aufbereitung der Lebensmittel in dem Gefäß erfolgen. In der Vorbereitungsposition ist das Gefäß insbesondere unterhalb der Dampfsonde entlang der Hubachse der Dampfsonde angeordnet. Der Verlagerungsantrieb ist insbesondere ein Linearantrieb. Ein Linearantrieb ist unkompliziert ausgeführt.

Eine Vorrichtung gemäß Anspruch 6 ermöglicht eine integrierte Reinigung der Dampfzuführeinheit. Ein regelmäßiges Reinigen, insbesondere in Abhängigkeit der Anzahl der zubereiteten Lebensmittelportionen, ist unkompliziert und automatisiert möglich.

Eine Vorrichtung gemäß Anspruch 7 ermöglicht ein unmittelbares Abwaschen von Lebensmittelrückständen von der Dampfsonde und insbesondere der daran befestigten Gefäßabdeckung.

Eine Vorrichtung gemäß Anspruch 8 gewährleistet, dass die Vorrichtung während eines Reinigungsvorgangs durch Reinigungswasser nicht verschmutzt wird. Insbesondere ist das Reinigungsbecken derart ausgeführt, dass die Gefäßabdeckung daran abdichtend anliegt.

Eine Vorrichtung gemäß Anspruch 9 ermöglicht eine Überhitzung des in der Dampferzeugungseinheit erzeugten Dampfes auf beispielsweise 250 °C. Der in der Dampferzeugungseinheit erzeugte Dampft hat typischerweise eine Temperatur von bis zu 200 °C. Die Dampfüberhitzungseinheit ermöglicht eine einstellbare Überhitzungstemperatur von 200 °C bis 400 °C und insbesondere von 200 °C bis 300 °C. Der von der Dampferzeugungseinheit der Dampfüberhitzungseinheit zugeführte Dampf hat einen Wasseranteil von etwa 70 g bis 100 g bezogen auf 400 ml Prozesswasser. Dadurch, dass der Dampf zusätzlich überhitzt wird, weist der Dampf einen reduzierten Wasseranteil auf. Es ist beispielsweise möglich, den ursprünglichen Wasseranteil im Dampf auf höchstens 80 % des Wasseranteils, mit dem der Dampf zugeführt worden ist, zu reduzieren, insbesondere auf höchstens 70 %, insbesondere auf höchstens 65 %, und insbesondere auf höchstens 60 %, und insbesondere auf höchstens 50 %. In dem genannten Beispiel wurde der Wasseranteil durch das Überhitzen in der Dampfüberhitzungseinheit bezogen auf 400 ml Prozesswasser auf etwa 40 g bis 60 g reduziert. Zudem wurde erkannt, dass eine zu starke Reduzierung des Wasseranteils im Dampf sich nachteilig auf die Aufbereitung der Lebensmittel auswirkt. Bei Unterschreiten eines Mindest-Wasseranteils von beispielsweise 30 g bezogen auf 400 ml Prozesswasser, wird eine unzureichende Erhitzung des Produkts mit dem zu trockenen Dampf erforderlich bzw. eine gewünschte Erhitzung dauert unverhältnismäßig lange, beispielsweise mehr als 30 s, so dass derart trockener Dampf insbesondere für die Anwendung in einem automatisierten Lebensmittelaufbereitungsprozess nicht effektiv nutzbar ist. Ferner wurde erkannt, dass der angegebene Wasseranteil einerseits eine ausreichende Erhitzung der Lebensmittel innerhalb weniger Sekunden, insbesondere innerhalb von 8 s bis 12 s, insbesondere bei kontinuierlicher Bedampfung der Lebensmittel möglich ist. Dadurch ist das Verfahren zum Aufbereiten der Lebensmittel vereinfacht. Insbesondere ist es möglich, den Aufbereitungsprozess an die aufzubereitenden Lebensmittel anzupassen. Beispielsweise ist eine vergleichsweise längere Bedampfung von etwa 10 s bis 12 s für stark pastöse Lebensmittel, wie beispielsweise Fleischsoße mit Tomaten, vorteilhaft. Bei weniger pastösen Produkten, wie flüssigen Soßen und/oder dünne Nudeln und/oder leicht erhitzbare Produkte, wie Carbonarasoße, können 8 s bis 9 s Bedampfungsdauer ausreichen. Trockenerer Dampf als aus der Dampferzeugungseinheit ist für die Aufbereitung der Lebensmittel vorteilhaft. Ein unerwünschtes Aufweichen der Speisen durch zusätzliche Wasserzufuhr ist vermieden.

Eine Vorrichtung gemäß Anspruch 10 ermöglicht einen nachhaltigen Betrieb der Vorrichtung, insbesondere bei einem Anschluss an ein Wasserleitungsversorgungsnetz. Es ist unbedenklich, Leitungswasser, das regional abhängig große Wasserhärteunterschiede aufweisen kann, unkompliziert zu nutzen. Mittels einer Wasserenthärtereinheit kann Wasser mit veränderlich einstellbarer Wasserhärte für die Vorrichtung zur Verfügung gestellt werden.

Eine Vorrichtung gemäß Anspruch 11 ermöglicht eine unkomplizierte Kopplung der Dampfsonde mit einer Zuführleitung. Die Kopplung gewährleistet, dass Drehbewegung der Dampfsonde um die Hubachse erfolgen kann, während die Zuführleitung an die Dampfsonde angeschlossen ist.

Das erfindungsgemäße Verfahren weist im Wesentlichen die Vorteile der Vorrichtung auf, worauf hiermit verwiesen wird.

Das Verfahren, bei dem ein Drehen der Dampfsonde während der Dampfzuführung erfolgt, gewährleistet eine verbesserte Durchmischung der Lebensmittel im dem Gefäß, wobei eine hierfür erforderliche Dampfsondenbewegung vereinfacht ist. Eine Hubbewegung der Dampfsonde während der Dampfzuführung ist entbehrlich. Insbesondere erfolgt während der Dampfzuführung ausschließlich eine Drehbewegung der Dampfsonde.

Ein Verfahren gemäß Anspruch 13 gewährleistet die Zurverfügungstellung von trockenem Dampf.

Sowohl die in den Patentansprüchen angegebenen Merkmale als auch die in dem nachfolgenden Ausführungsbeispiel der erfindungsgemäßen Vorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine Seitenansicht einer erfindungsgemäßen Vorrichtung in einer Abgabe-/Entnahmeposition,
- Fig. 2: eine weitere Seitenansicht der Vorrichtung gemäß Fig. 1,
- Fig. 3: eine Fig. 1 entsprechende Ansicht der Vorrichtung in einer Vorbereitungsposition,
- Fig. 4: eine Fig. 1 entsprechende Darstellung der Vorrichtung in einer Lebensmittelaufbereitungsposition,
- Fig. 5: eine vergrößerte Schnittansicht gemäß Schnittlinie V-V in Fig. 4,
- Fig. 6: eine Fig. 1 entsprechende Darstellung der Vorrichtung in einer Reinigungsposition,

- Fig. 7: eine vergrößerte Schnittdarstellung gemäß Schnittlinie VII-VII in Fig. 6,
- Fig. 8: eine vergrößerte Schnittdarstellung gemäß Schnittlinie VIII-VIII in Fig. 3,
- Fig. 9: eine vergrößerte perspektivische Darstellung einer Dampfsonde der Vorrichtung gemäß Fig. 1,
- Fig. 10: eine Ansicht der Sonde gemäß Fig. 9 von unten,
- Fig. 11: eine vergrößerte perspektivische Ansicht einer Reinigungseinheit der Vorrichtung gemäß Fig. 1.

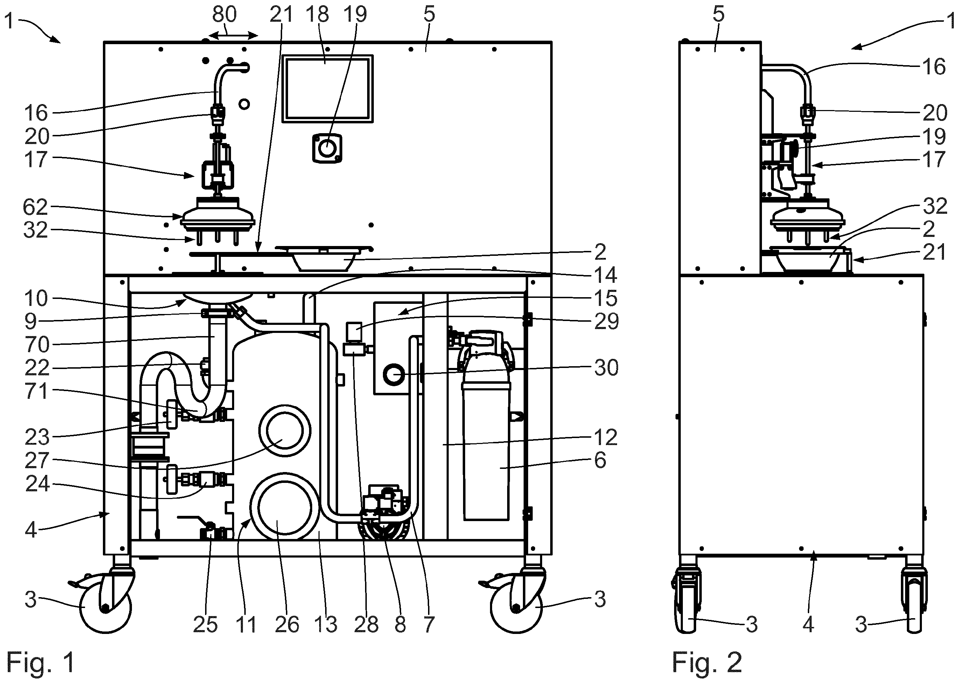

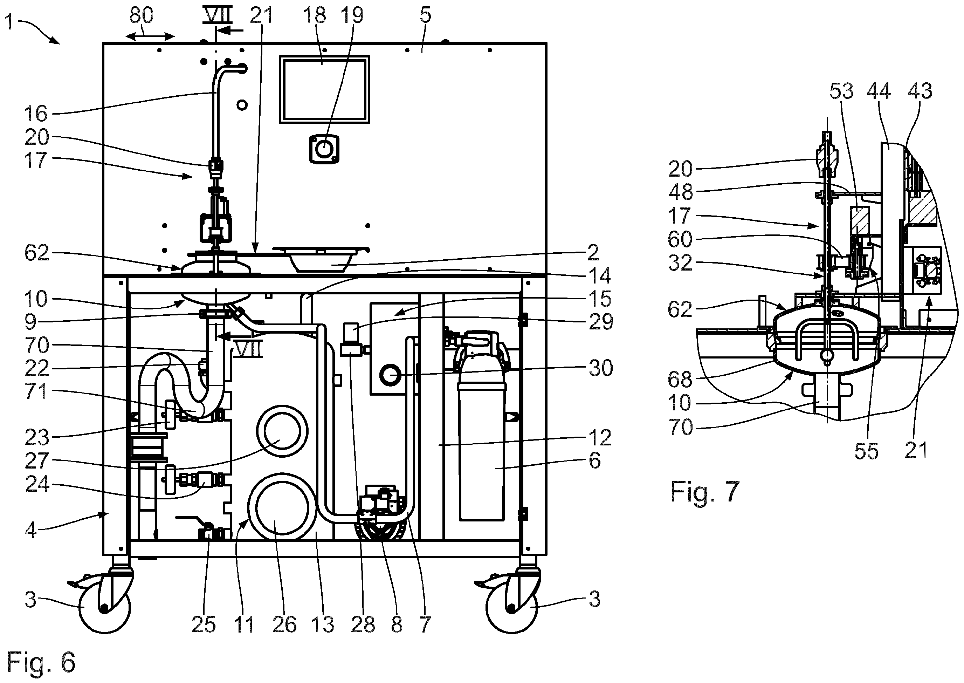

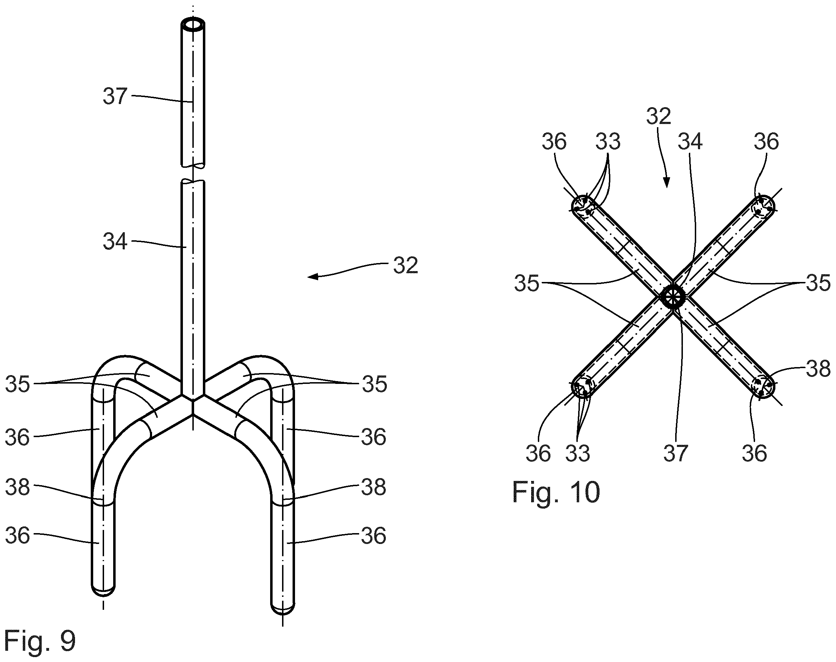

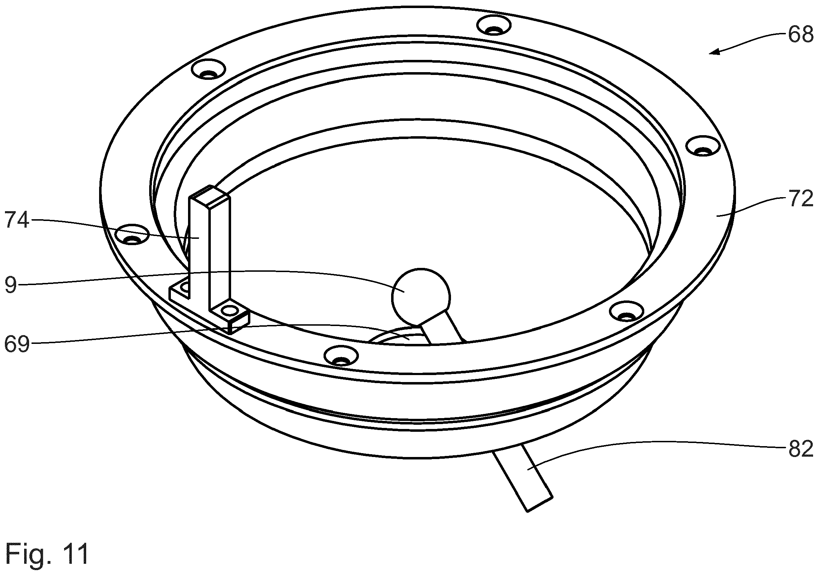

Eine in Fig. 1 bis 11 dargestellte Vorrichtung 1 dient zum Aufbereiten von Lebensmitteln, die in einem dafür vorgesehenen Gefäß 2 angeordnet sind. Die Vorrichtung 1 weist ein auf Rädern 3 fahrbares Gestell mit einem unteren Gehäuse 4 und einem oberen Kasten 5 auf. Das Gehäuse 4 ist quaderförmig ausgeführt und an den sechs Seitenflächen mittels Abdeckplatten verblendbar ausgeführt. Gemäß der Darstellung in Fig. 1 ist eine vordere Abdeckplatte entfernt, damit in dem Gehäuse 4 angeordnete Komponenten sichtbar sind. Der Kasten 5 ist auf dem Gehäuse 4 angeordnet. Der Kasten 5 ist quaderförmig ausgeführt. Die Seitenflächen des Kastens 5 sind mit Abdeckplatten verblendet. Der Kasten 5 weist die gleiche Breite wie das Gehäuse 4 auf. Gegenüber dem Gehäuse 4 weist der Kasten 5 eine reduzierte Tiefe auf. Der Kasten 5 ist mit dem Gehäuse 4 verbunden. Der Kasten 5 und das Gehäuse 4 bilden eine Einheit.

In dem Gehäuse 4 ist eine Wasserenthärtereinheit 6 angeordnet. Die gezeigte Vorderseite des Gehäuses 4 ist durch eine Vertikalstrebe 12 in zwei fensterartige Öffnungen unterteilt. Die in Fig. 1 rechts gezeigte Öffnung kann mittels einer schwenkbar angelenkten Tür öffenbar ausgeführt sein. Durch eine derart öffenbare, nicht dargestellte Tür ist die Zugänglichkeit zu der Wasserenthärtereinheit 6 vereinfacht. Die durch die Vertikalstrebe 12 erzeugte Unterteilung der Vorderseite des Gehäuses 4 ist derart gewählt, dass der über die Tür zugängliche Innenraum des Gehäuses 4 zur Aufbewahrung der Wasserenthärtereinheit 6 dient. Insbesondere ist für einen Tausch der Filterkartusche und/oder für die Reinigung der Wasserenthärtereinheit 6 Werkzeug nicht erforderlich. Die Handhabung der Vorrichtung 1 und insbesondere der Wasserenthärtereinheit 6 ist vereinfacht. Die Wasserenthärtereinheit 6 ist ein Wasserfiltersystem mit einer einsetzbaren Filterkartusche. Das Wasserfiltersystem ist unkompliziert in der Handhabung, insbesondere kann durch einen regelmäßigen Tausch der Filterkartusche eine langfristige Nutzung des Wasserfiltersystems gewährleistet werden. Die Reinigung des Filtersystems ist vereinfacht.

Die Wasserenthärtereinheit 6 ist über eine Wasserzulaufleitung für eine Versorgung mit einem Hauswasseranschluss verbunden. Die hierfür erforderliche Schlauchleitung ist aus Darstellungsgründen nicht gezeigt.

An die Wasserenthärtereinheit 6 ist eine weitere Schlauchleitung 7 angeschlossen. Die Schlauchleitung 7 ist als flexibler Schlauch ausgeführt. An die Schlauchleitung 7 ist über ein im Wesentlichen T-förmiges Verteilerstück einerseits mit einer Pumpe 8 und andererseits über ein nicht dargestelltes Magnetventil mit einem Reinigungssprühkopf 9 einer Reinigungseinheit 10 verbunden. Über die Pumpe 8 führt eine weitere, nicht dargestellte Schlauchleitung in eine Dampferzeugungseinheit 11, die zum Erzeugen von Wasserdampf aus der Wasserenthärtereinheit 6 dient. An der Pumpe 8 ist ein nicht dargestelltes Rückschlagventil bis 10 bar angeschlossen. Mittels des Rückschlagventils ist ausgeschlossen, dass Wasser aus der Dampferzeugungseinheit 10 zurück in die Pumpe 8 gedrückt wird.

Die Dampferzeugungseinheit 11 umfasst einen Kesselbehälter 13, der insbesondere aus Edelstahl hergestellt ist und eine äußere Isolierungsschicht aufweist. Der Kesselbehälter ist im Wesentlichen hohlzylindrisch ausgeführt. Der Kesselbehälter 13 hat ein Füllvolumen von 25 1. An einem oberen, gewölbten Deckel ist eine Dampfauslassöffnung vorgesehen, an der eine Verbindungsleitung 14 angeschlossen ist. Der Kesselbehälter 13 ist mit der Pumpe 8 und den erforderlichen Armaturen auf einer Bodenplatte des Gehäuses 4 fest verschraubt. Alle Verbindungen sind konisch ausgeführt, also metallisch dichtend, um Leckagen zu vermeiden.

Über die Verbindungsleitung 14 ist die Dampferzeugungseinheit 11 mit einer Dampfüberhitzungseinheit 15 verbunden. An die Dampfüberhitzungseinheit 15 ist eine starre Rohrleitung angeschlossen, die von dem Gehäuse 4 in den Kasten 5 geführt ist. Die starre Rohrleitung ist insbesondere aus Edelstahl ausgeführt und wärmeisoliert. Dadurch ist gewährleistet, dass möglichst wenig Energie durch den Transport des heißen Dampfes verloren geht und sich Kondensat bildet. Die starre Rohrleitung ist mit einer flexiblen Schlauchleitung verbunden. Die flexible Schlauchleitung erstreckt sich über etwa 200 mm in einem unbelasteten Zustand. Die flexible Schlauchleitung ist elastisch verlängerbar. Insbesondere ist die flexible Schlauchleitung ausziehbar und wieder komprimierbar. Die flexible Schlauchleitung ist eine Zuführleitung 16. Über die Zuführleitung 16 ist die Dampfüberhitzungseinheit 15 mit einer Dampfzuführeinheit 17 verbunden. Die Dampfzuführeinheit 17 dient zum Zuführen von Dampf in das Gefäß 2.

An dem Kasten 5 ist eine Einhausung 31 für die Zuführleitung 16 und die Dampfzuführeinheit 17 vorgesehen. Die Einhausung 31 dient zum Schutz vor Fehlbedienung durch einen ungeübten Benutzer. Insbesondere soll vermieden werden, dass eine Person während der Zubereitung der Speisen, insbesondere während der Verlagerung des Gefäßes 2 und/oder der Dampfzuführeinheit 17, die beweglichen Teile kontaktiert. Die Einhausung 31 ist eine Schutzvorrichtung und reduziert das Risiko einer Verletzung eines Bedieners. Die Einhausung 31 ist insbesondere aus transparentem oder teiltransparentem Material, wie beispielsweise Glas oder transparentem Kunststoff, insbesondere PMMA, ausgeführt. Die Einhausung 31 weist eine Öffnung auf, durch die das Gefäß 2 in die Einhausung 31 zu der Dampfzuführeinheit 17 hin oder aus der Einhausung heraus von der Dampfzuführeinheit 17 weg verlagert werden kann.

Die Vorrichtung 1 weist eine nicht näher dargestellte, zentrale Steuereinheit auf, mittels der verschiedene Vorgänge zur Handhabung der Vorrichtung 1 steuerbar sind. Die Steuereinheit weist eine Eingabe-/Ausgabeeinheit 18 in Form eines Berührbildschirms auf. Der Bildschirm dient zum Darstellen von Verfahrenparametern wie beispielsweise Temperatur und/oder Druck des zugeführten Dampfes in das Gefäß 2. Über die Berührfunktion des Berührbildschirms können Steuerbefehle in die Eingabe-/Ausgabeeinheit 18 eingegeben werden. Unterhalb der Eingabe-/Ausgabeeinheit 18 ist an dem Kasten 5 ein Not-Aus-Schalter 19 in Form eines Tastknopfes, insbesondere zum Schutz vor falscher Bedienung, vorgesehen.

Die Zuführleitung 16 ist mit der Dampfzuführeinheit 17 über ein Rohrdrehgelenk 20 gekoppelt. Das Rohrdrehgelenk 20 dient der kinematischen Entkopplung der Zuführleitung 16 von der Dampfzuführeinheit 17. Das Rohrdrehgelenk 20 gewährleistet eine Drehbarkeit der Dampfzuführeinheit 17 gegenüber der Zuführleitung 16. Dadurch ist gewährleistet, dass eine Drehung der Dampfzuführeinheit 17 nicht zu einem Verdrehen der Zuführleitung 16 führt.

Das Rohrdrehgelenk 20 ist geeignet, Dampf mit erhöhter Temperatur und/oder mit erhöhtem Druck standzuhalten. Das Rohrgelenk 20 ist dampfsicher geschlossen.

An einer Unterseite des Gehäuses 2 ist eine Gefäß-Halteeinheit 21 vorgesehen.

Nachfolgend wird die Dampferzeugungseinheit 11 näher erläutert. An dem Kesselbehälter 13 ist ein Sicherheitsventil 22 angeschlossen. Das Sicherheitsventil 22 hat einen Ablassdruck von 8 bar. Unterhalb des Sicherheitsventils 22 sind ein Absperrventil 23 und ein Probeentnahmehahn 24 angeordnet. Zwischen dem Absperrventil 23 und dem Probeentnahmehahn 24 kann eine nicht dargestellte Schauglasanzeige zur Überprüfung des Kesselfüllstands vorgesehen sein. Die Schauglasanzeige ist über eine geeignete Dichtung jeweils mit dem Absperrventil 23 und dem Probeentnahmehahn 24 verbunden. Unterhalb des Probeentnahmehahns 24 und insbesondere im Bereich des Bodens des Kesselbehälters 13 ist ein Entschlammungsventil 25 mit Magnetventil zur automatischen Kesselentschlammung vorgesehen. Die Kesselentschlammung kann nach Bedarf oder regelmäßig beispielsweise anhand regelmäßiger Zeitabstände, die insbesondere in der Steuereinheit hinterlegt sein können, durchgeführt werden.

An einer Seitenwand des Kesselbehälters 13 ist ein zweistufiger Heizkörper 26 mit einer maximalen Heizleistung von 2 · 3,9 kW in das Innere des Kesselbehälters 13 geführt. Der Heizkörper 26 ist abgedichtet und insbesondere radial zur Längsachse des zylindrischen Kesselbehälters 13 abgedichtet an dem Kesselbehälter 13 angeordnet. Der Heizkörper 26 ist ein elektrischer Heizkörper. Es sind auch andere Heizquellen denkbar. Wesentlich ist, dass der Heizkörper 26 eine Wärmequelle ist, die zur Erwärmung des Wassers in der Dampferzeugungseinheit 11 dient.

Oberhalb des Heizkörpers 26 ist ein Schwimmerschalter 27 vorgesehen. Der Schwimmerschalter 27 dient zur Füllstandsbegrenzung von Wasser in der Dampferzeugungseinheit 15, insbesondere im Kesselbehälter 13. Der Schwimmerschalter 27 ist über die Zylinderseitenwand des Kesselbehälters 13 in diesen abgedichtet hineingeführt.

Nachfolgend wird die Dampfüberhitzungseinheit 15 näher erläutert. Die Dampfüberhitzungseinheit 15 ist mit der Dampferzeugungseinheit 11 verbunden. Die Dampfüberhitzungseinheit 15 weist eine Eingangsöffnung 28 mit daran gekoppeltem Magnetventil 29 auf. Über einen nicht dargestellten Stromanschluss kann der Dampfüberhitzungseinheit 15 elektrische Energie zum Überhitzen des aus der Dampferzeugungseinheit 11 zugeführten Dampfes zugeführt werden. Mittels eines Thermostats 30 mit einem Drehknopf kann eine gewünschte Soll-Temperatur für den überhitzten Dampf eingestellt werden. Der Bereich der einstellbaren Soll-Temperatur liegt gemäß dem gezeigten Ausführungsbeispiel zwischen 200 °C und 300 °C. In Abhängigkeit der gewünschten Anwendung kann die Soll-Temperatur auch kleiner sein als 200 °C oder größer sein als 300 °C.

Nachfolgend wird die Dampfzuführeinheit 17 näher erläutert. Die Dampfzuführeinheit 17 weist eine rohrförmige Dampfsonde 32 auf. Die Dampfsonde 32 ist unmittelbar an dem Rohrdrehgelenk 20 gekoppelt. Die Dampfsonde 32 weist ein inneres Lumen auf, durch das Dampf, der über die Zuführleitung 16 der Dampfsonde 32 zugeführt wird, in das Gefäß 2 abgegeben werden kann. Zur Abgabe des Dampfes weist die Dampfsonde 32 mehrere Dampfabgabeöffnungen 33 auf. Die Dampfabgabeöffnungen 33 haben jeweils einen Durchmesser von höchstens 2 mm, insbesondere von höchstens 1,5 mm und insbesondere von höchstens 1 mm.

Die Dampfsonde 32 weist ein Zentralrohr 34 auf, an dessen unteren Ende, das dem Rohrdrehgelenk 20 gegenüberliegend angeordnet ist, ein kreuzförmiges Verteilerstück 35, insbesondere einteilig, angeformt ist. An das Verteilerstück 35 schließen sich vier, jeweils L-förmig gebogene Endabschnitte 36 an. Die Endabschnitte 36 sind bezogen auf die Rohrlängsachse 37 des Zentralrohrs 34 gleich beabstandet angeordnet. Ein Öffnungswinkel bezogen auf die Rohrlängsachse 37 zwischen zwei benachbarten Endabschnitten 36 beträgt 90°.

Es ist auch möglich, die Endabschnitte 36 ungleich beabstandet bezogen auf die Rohrlängsachse 37 anzuordnen. Es ist auch denkbar, mehr oder weniger als vier Endabschnitte 36 vorzusehen. Vorteilhaft ist es, wenn mindestens ein Element der Dampfsonde 32 exzentrisch zur Rohrlängsachse 37 als Mischelement angeordnet ist.

An den jeweils unteren kugelkalottenförmigen Enden der freien Endabschnitte 36 sind jeweils die Dampfabgabeöffnungen 33 angeordnet. An jedem Endabschnitt 36 sind gemäß dem gezeigten Ausführungsbeispiel drei Dampfabgabeöffnungen 33 vorgesehen, die bezogen auf eine Endabschnittlängsachse 38 gleich beabstandet, also mit einem 120°-Öffnungwinkel zueinander bezogen auf die Endabschnittlängsachse 38 angeordnet sind. In Abhängigkeit der zuzuführenden Energiemenge, also in Abhängigkeit der zuzuführenden Dampfmenge, können die Größe und/oder die Anzahl der Dampfabgabeöffnungen 33 variieren.

Die Dampfsonde 32 ist insbesondere einstückig aus Edelstahl hergestellt. Die Dampfsonde 32 kann eine haftverhindernde Beschichtung, insbesondere eine Beschichtung aus Polytetrafluorethylen (PTFE) aufweisen, um ein Anhaften der Lebensmittel an der Dampfsonde 32 zu vermeiden. Insbesondere sind sowohl sämtliche Außenflächen der Dampfsonde 32 als auch sämtliche Innenflächen der Dampfsonde 32 mit der haftverhindernden Beschichtung ausgeführt. Ein weiterer Vorteil dieser haftverhindernden Beschichtung besteht darin, dass Lebensmittel nicht anbrennen und insbesondere erhitztes Fett sich von der Oberfläche bei der Reinigung löst. Insbesondere ist die haftverhindernde Beschichtung lebensmittelecht ausgeführt.

Bei der Dampfsonde 32 sind die jeweils diametral bezogen auf die Rohrlängsachse 37 gegenüberliegend angeordneten Endabschnitte 36 identisch ausgeführt. Jeweils zwei benachbarte Endabschnitte 36 sind verschieden zueinander ausgeführt. Die verschiedenartige Ausführung der benachbarten Endabschnitte 36 ist gemäß dem gezeigten Ausführungsbeispiel dadurch gegeben, dass ein erster Endabschnitt eine erste Länge L₁ und zweiter Endabschnitt eine zweite Länge L₂ aufweisen, wobei die erste L₁ größer ist als die zweite Länge L₂. An den die erste Länge L₁ aufweisenden Endabschnitten 36 sind erste Dampfabgabeöffnungen 33 angeordnet, die an einer ersten, senkrecht zur Rohrlängsachse 37 orientierten Ebene angeordnet sind. Entsprechend sind zweite Dampfabgabeöffnungen 33 an den Enden der kürzeren, die zweite Länge L₂ aufweisende Endabschnitte 36 in einer zweiten Ebene, senkrecht zur Rohrlängsachse 37 orientiert, angeordnet. Die erste Ebene und die zweite Ebene sind entlang der Rohrlängsachse 37 beabstandet zueinander angeordnet. Die Endabschnittlängsachsen 38 sind zueinander parallel orientiert. Die Endabschnittlängsachse 38 ist parallel zur Rohrlängsachse 37 orientiert. Der Abstand zwischen der ersten Ebene und der zweiten Ebene entspricht der Differenz der ersten Länge L₁ von der zweiten Länge L₂.

Die Dampfzuführeinheit 17 weist einen Dampfsonden-Hubantrieb 39 auf. Der Dampfsonden-Hubantrieb 39 ermöglicht eine Hubbewegung der Dampfsonde 32 entlang einer Hubachse 40, die konzentrisch angeordnet ist zur Rohrlängsachse 37.

Der Dampfsonden-Hubantrieb 39 umfasst einen Elektromotor 41, eine an dem Kasten 5 befestigte Führungsschiene 42, die eine Linearverlagerungsrichtung vorgibt. Die Linearverlagerungsrichtung ist parallel zur Hubachse 40. Entlang der Linearverlagerungsrichtung ist an der Führungsschiene 42 ein Führungsschlitten 43 verlagerbar. Der Führungsschlitten 43 ist im Wesentlichen durch eine Platte ausgeführt, an der ein Winkelelement 44 befestigt ist. Das Winkelelement 44 ist an einem oberen Ende mit dem Führungsschlitten 43 verbunden. An einem dem oberen Ende gegenüberliegenden unteren Ende ist eine Grundplatte 45 befestigt. In die Grundplatte 45 ist ein Gleitlager 46 eingesetzt, durch das die Dampfsonde 32 durch die Grundplatte 45 geführt ist. Das Gleitlager 46 ist mittels eines Stellrings 47 an der Grundplatte 45 gehalten.

Der Grundplatte 45 gegenüberliegend ist eine Deckplatte 48 vorgesehen, in die ein weiteres Gleitlager 46 eingesetzt ist, das mittels eines weiteren Stellrings 47 an der Deckplatte 48 gehalten ist. Die jeweiligen Öffnungen in der Grundplatte 45 und in der Deckplatte 48, durch die jeweils die Dampfsonde 32 geführt ist, sind entlang der Hubachse 40 konzentrisch zueinander angeordnet. Die Grundplatte 45 und die Deckplatte 48 sind parallel zueinander und insbesondere senkrecht zur Hubachse 40, orientiert. Die Stellringe 47 sind jeweils an einer der gegenüberliegenden Platte 45 und 48 orientierten Innenseite angeordnet.

Oberhalb der Deckplatte 48 ist eine obere Abdeckung 49 angeordnet. Die obere Abdeckung 49 ist L-förmig ausgeführt und weist einen Frontabschnitt auf, der sich bis zur unten angeordneten Grundplatte 45 erstreckt. Dadurch ist eine geschlossene Motorabdeckung 50 geschaffen, die an einer Oberseite eine Durchführöffnung 51 aufweist, durch die die Dampfsonde 32 geführt ist. Die Motorabdeckung 50 gewährleistet, dass selbst bei geöffneter Einhausung 31 unbefugte, insbesondere bewegliche Komponenten eines Dampfsonden-Drehantriebs 54 eingreifen können.

Zwischen der Grundplatte 45 und der Deckplatte 48 entlang der Hubachse 40 ist eine Motorkonsole 52 an dem Winkelelement 44 befestigt. Die Motorkonsole 52 erstreckt sich senkrecht zur Hubachse 40. Die Motorkonsole 52 ist parallel zur Grundplatte 45 und zur Deckplatte 48 orientiert. Die Motorkonsole 52 trägt den Dampfsonden-Drehantrieb 54, der eine Drehbewegung der Dampfsonde 32 um die Hubachse 40 ermöglicht. Der Dampfsonden-Drehantrieb 54 weist einen weiteren Elektromotor 53 auf, der an einer Oberseite der Motorkonsole 52 gehalten ist. Durch eine Linearverlagerung des Dampfsonden-Hubantriebs 39 entlang der Hubachse 40 wird der Dampfsonden-Drehantrieb 54 unmittelbar entlang der Hubachse 40 mitverlagert. An der Motorkonsole 52 ist eine Achsenlagerkonsole 55 befestigt. Die Achsenlagerkonsole 55 weist eine Öffnung auf, in die ein Gleitlager 46 eingesetzt ist und in den eine Achse 56 eingesetzt ist. Die Achse 56 ist in drehmomentübertragender Weise mit einem Abtrieb des Elektromotors 53 mittels einer Metall-Balgkupplung 57 gekoppelt. Auf der Achse 56 ist mittels eines Spannsatzes 58 ein Antriebs-Zahnrad 59 gehalten. Das Antriebs-Zahnrad 59 wirkt mit einem Zahnriemen 60 zusammen, der die Drehantriebsbewegung auf ein Abtriebs-Zahnrad 61 überträgt. Das Abtriebs-Zahnrad 61 ist mittels eines weiteren Spannsatzes 58 in drehmomentübertragender Weise mit der Dampfsonde 32 und insbesondere mit dem Zentralrohr 34 verbunden.

Die Dampfzuführeinheit 17 weist ferner eine Gefäßabdeckung 62 auf, die auch als Dampfglocke bezeichnet wird. Die Gefäßabdeckung 62 ist glockenförmig ausgeführt mit einem im Wesentlichen geschlossenen Glockenoberteil 63 und einem daran befestigten Glockenunterteil 64. Das Glockenoberteil 63 ist mit dem Glockenunterteil 64 fest und insbesondere unlösbar miteinander verbunden. Das Glockenunterteil 64 weist einen verjüngenden Querschnitt in Richtung der Dampfabgabeöffnung 33 der Dampfsonde 32 auf. Das Glockenunterteil 64 ist insbesondere aus einem abdichtenden Material, insbesondere aus Edelstahl hergestellt.

Das Glockenoberteil 63 weist in einem oberen Bereich eine Öffnung auf, in die ein Dichtungselement 65 eingesetzt ist, das mittels einer Abdeckscheibe 66, insbesondere in axialer Richtung der Hubachse 40, fixiert und geschützt ist. An einer Außenseite der Gefäßabdeckung 62, insbesondere an dem Glockenoberteil 63, ist ein Zylindersteg 67 angeordnet, dessen ringförmige Stirnfläche als Anlagefläche an einer Unterseite der Grundplatte 45 dient.

Die Gefäßabdeckung 62 ist an der Dampfsonde 32 befestigt und insbesondere bezüglich einer Axialverlagerung entlang der Hubachse 40 bezüglich einer Drehbewegung um die Hubachse 40 fest mit der Dampfsonde 32 verbunden. Eine Linearverlagerung der Dampfsonde 32 entlang der Hubachse 40 und bezüglich einer Drehbewegung um die Hubachse 40 bewirkt unmittelbar eine Linearverlagerung der Gefäßabdeckung 62. Die Gefäßabdeckung 62 wird gemeinsam mit der Dampfsonde 32 verlagert, entweder linear entlang der Hubachse 40 und/oder mit einer Drehbewegung um die Hubachse 40.

Die Reinigungseinheit 10 umfasst ein Reinigungsbecken 68, in dem der Reinigungs-Sprühkopf 9 angeordnet ist. Das Reinigungsbecken 68 weist im Bereich seiner tiefsten Stelle eine Abschlussöffnung 69 auf, an die ein Abschlussrohr 70 mit Siphon 71 angeschlossen ist.

Das Reinigungsbecken 68 weist einen oberen Ringflansch 72 auf, mit dem das Reinigungsbecken 68 an einer oberen Abdeckplatte 73 des Gehäuses 4 aufliegen und mittels Befestigungsschrauben angeschraubt sein kann. An einer vorderen, der Einhausung 31 zugewandten Seite ist ein Stützelement 74 am Ringflansch 72 befestigt. Das Stützelement 74 dient zum Aufliegen der Gefäß-Halteeinheit 21.

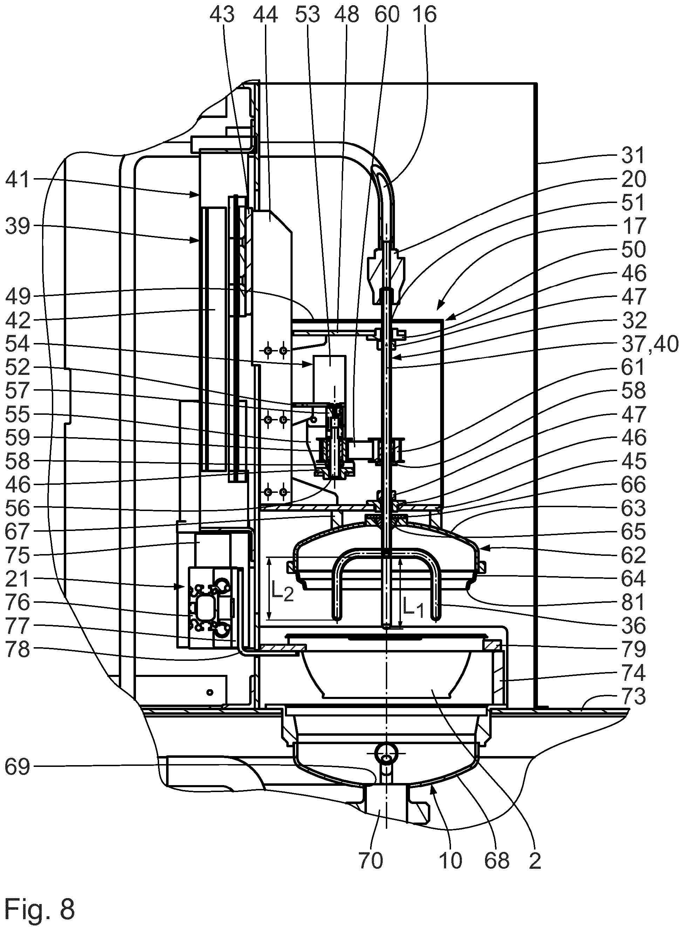

Nachfolgend wird die Gefäß-Halteeinheit 21 näher erläutert. Die Gefäß-Halteeinheit weist einen Elektromotor 75 auf, der einen nicht näher dargestellten Zahnriemen antreibt, der eine Linearverlagerung entlang einer Verlagerungsrichtung ermöglicht. Die Verlagerungsrichtung ist gemäß Fig. 8 senkrecht zur Zeichenebene orientiert. Für die Linearverlagerung dient eine Führungsschiene 76, die fest mit dem Kasten 5 verbunden ist. Die Führungsschiene 76 ist insbesondere als metallisches Leichtbauelement, insbesondere als Leichtmetall-Profilschiene, ausgeführt. An der Führungsschiene 76 kann entlang der Linearverlagerungsrichtung ein Führungsschlitten 77 linear verlagert werden. An dem Führungsschlitten 77 ist ein winkelförmiges Befestigungselement 78 befestigt, das einen Dichtring 79 trägt. Der Dichtring 79 ist ringförmig ausgeführt und weist eine kreisförmige Aufnahme auf, in die das Gefäß 2 eingesetzt werden kann. Das Gefäß kann mit einem oberen Radialrand an einer Oberseite des Dichtrings 79 aufliegen und ist damit sicher und zuverlässig und insbesondere vollumfänglich an der Gefäß-Halteeinheit 21 gehalten.

Nachfolgend wird ein Verfahren zur Aufbereitung von Lebensmitteln in dem Gefäß 2 näher erläutert. Das mit Lebensmitteln, insbesondere mit Nudeln und Soße, gefülltes Gefäß 2 wird in den Dichtring 79 der Gefäß-Halterung 21 eingesetzt. Die Gefäß-Halterung 21 befindet sich gemäß Fig. 1 in einer Abgabe-/Entnahmeposition. Die Abgabe-/Entnahmeposition befindet sich gemäß Fig. 1 an einem rechten Ende der Führungsschiene 76. In der Abgabe-/Entnahmeposition ist das Gefäß 2 und insbesondere der Dichtring 79 der Gefäß-Halteeinheit 21 entfernt von der Dampfzuführeinheit 17 angeordnet. Das in der Gefäß-Halteeinheit 21 gehaltene Gefäß 2 ist derart oberhalb der oberen Abdeckplatte 73 des Gehäuses angeordnet, dass der Gefäßboden von der oberen Abdeckplatte 73 beabstandet angeordnet ist. Das Gefäß 2 ist ausschließlich durch die Gefäß-Halteeinheit 21 gehalten.

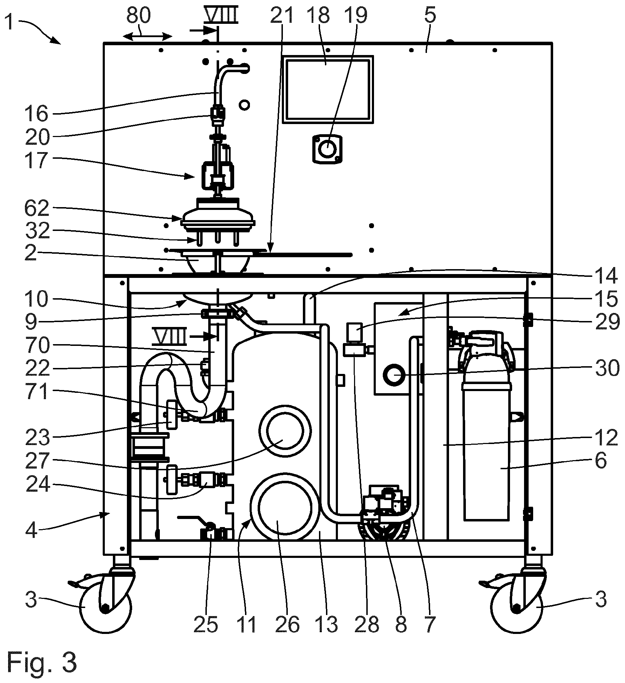

Anschließend erfolgt eine Linearverlagerung entlang der Linearverlagerungsrichtung 80 in die in Fig. 3 gezeigte Vorbereitungsposition. Das Gefäß 2 mit dem Dichtring 79 ist gemäß Fig. 3 an einem linken Ende der Führungsschiene 76 angeordnet.

In der Vorbereitungsposition ist das Gefäß 2 konzentrisch zur Hubachse 40 orientiert. Das Gefäß 2 ist zentral unterhalb der Dampfzuführeinheit 17 angeordnet.

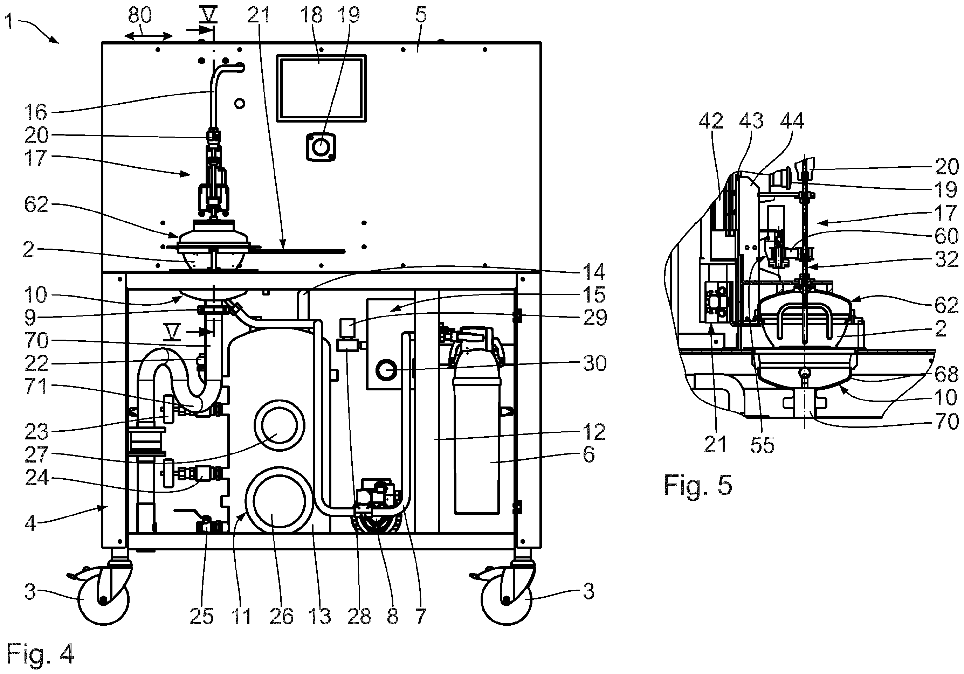

Anschließend erfolgt eine Linearverlagerung der Dampfzuführeinheit 17 mittels des Dampfsonden-Hubantriebs 39. Diese Hubbewegung entlang der Hubachse 40 nach unten erfolgt durch Linearverlagerung des Führungsschlittens 43 entlang der Führungsschiene 42 und insbesondere der damit verbundenen Komponenten, also der Motorabdeckung 50, der daran angeordneten Grundplatte 55 und der daran angeordneten Deckplatte 48. Zusammen mit dem Dampfsonden-Hubantrieb 49 wird auch die Dampfsonde 32 linear in eine untere Lebensmittelaufbereitungsposition verlagert, die in Fig. 4 und 5 dargestellt ist. Zusammen mit der Dampfsonde 32 wird auch das Rohrdrehgelenk 20 verlagert und der flexible Schlauch der Zuführleitung 16 ausgezogen bzw. verlängert.

In der in Fig. 4 und 5 gezeigten Anordnung ist das Gefäß 2 mit der Gefäßabdeckung 62 dampfdicht abgeschlossen. Insbesondere ist der konisch zulaufende Abschnitt des Glockenunterteils 64 komplementär zu dem Gefäß 2 ausgeführt. Insbesondere weist das Glockenunterteil 64 eine dünne, als Dichtlippe ausgeführte Abdichtung 81 auf. Durch das Verlagern entlang der Hubachse 40 nach unten taucht das Sondenrohr 32 mit den Endabschnitten 36 in die in dem Gefäß 2 angeordneten Lebensmittel ein. Dadurch, dass die Endabschnitte 36 unterschiedliche Längen L₁, L₂ aufweisen, sind die Dampfabgabeöffnungen 33 an den verschiedenen Höhenpositionen entlang der Hubachse 40 in den Lebensmitteln angeordnet. Mit den beispielsweise längeren ersten Endabschnitten 36 kann über die darin angeordneten Dampfabgabeöffnungen 33 Dampf der typischerweise unten im Gefäß 2 angeordneten Soße zugeführt werden. Entsprechend dienen die anderen Endabschnitte 36 zum Zuführen von Dampf zu den typischerweise oben angeordneten Nudeln.

Für die Dampfzuführung ist es erforderlich, dass Wasser über den Hauswasseranschluss zunächst der Wasserenthärtereinheit 6 zugeführt und dort enthärtet wird. Von der Wasserenthärtereinheit 6 gelangt das enthärtete Wasser über die Schlauchleitung 7 und die Pumpe 8 in die Dampferzeugungseinheit 11. Der Füllvorgang dauert solange, bis der Schwimmerschalter 27 einen maximal zulässigen Füllstand anzeigt. Der Schwimmerschalter kann insbesondere eine mit dem Wasserfüllstand aufsteigende Metallkugel aufweisen, die über das an der Pumpe 8 angeordnete Magnetventil die Wasserzufuhr automatisch beendet. Zusätzlich kann der Füllstand in dem Kesselbehälter 13 über das nicht dargestellte Schauglas, das zwischen dem Absperrventil 23 und dem Probeentnahmehahn 24 angeordnet ist, abgelesen werden.

Anschließend wird das Wasser im Kesselbehälter 13 mittels des zweistufigen Heizkörpers auf eine Temperatur von etwa 200 °C aufgeheizt. Insbesondere kann die Aufheizung druck- und/oder temperaturabhängig und insbesondere automatisiert erfolgen. Bei Erreichen der Zieltemperatur wird der Heizkörper 26 deaktiviert und insbesondere lediglich eine Einheit des zweistufigen Heizkörpers zum Nachheizen aktiviert. In dem Kesselbehälter sind zwei verschiedene, nicht dargestellte Drucksensoren angeordnet. Ein erster Drucksensor dient zum manuellen Einstellen des Kesseldrucks über ein Drehrad, das an einer Außenseite des Kesselbehälters 13 angeordnet ist. Zusätzlich kann ein weiterer Drucksensor im Bereich des Deckels des Kesselbehälters 13 angeordnet sein, um eine elektrische Druckmessung zu ermöglichen. Eine entsprechende Anzeige des Kesseldrucks kann über die Abgabe-/Aufgabeeinheit 18 erfolgen.

Zusätzlich kann ein Temperatursensor wie beispielsweise ein Pt100 zur elektrischen Temperaturmessung und Anzeige an der Eingabe-/Ausgabeeinheit 18 erfolgen. Über die Verbindungsleitung 14 gelangt der auf beispielsweise 200 °C erwärmte Wasserdampf in die Dampfüberhitzungseinheit 15. Wenn eine Bedampfung der Lebensmittel in dem Gefäß 2 erfolgen soll, wird die Einlassöffnung 28 an der Dampfüberhitzungseinheit 15 mittels des Magnetventils 29 elektrisch geschalten. Wasserdampf aus der Dampferzeugungseinheit 11 kann durch die Einlassöffnung 28 in die Dampfüberhitzungseinheit 15 strömen und auf eine einstellbare Ziel-Temperatur aufgeheizt werden. Die Ziel-Temperatur liegt typischerweise zwischen 200 °C und 300 °C. Der in der Dampfüberhitzungseinheit 15 angeordnete Strömungsüberhitzer umfasst ein gebogenes Rohr, durch das der Dampf strömt, sowie ein zentral angeordnetes, elektrisches Heizelement, das den zugeführten Dampf von außen überhitzt. Bei Erreichen der Ziel-temperatur in der Dampfüberhitzungseinheit 15 schaltet diese automatisch über die Steuereinheit der Vorrichtung 1 in Betrieb. Solange kein Dampf verbraucht wird, ist der Energieverbrauch für den Dampfüberhitzer gering. Um weitere Energieverluste zu vermeiden, können die Leitungen zum Zuführen von Dampf thermisch isoliert sein. Als Überhitzungsschutz kann die Dampfüberhitzungseinheit 15 ein Bimetall im Heizelement aufweisen, um eine automatische Abschaltung bei Überschreiten einer Schwellentemperatur zu garantieren.

Wärmeableitelemente, insbesondere Wärmeleitbleche, die unterhalb der oberen Abdeckplatte 73 angeordnet sind, verhindern, dass die obere Abdeckplatte 73, die insbesondere als Tischplatte fungiert, unbeabsichtigt stark aufgeheizt wird. Das Risiko von Verbrennungen und/oder schmerzhaften Berührungen eines Benutzers ist reduziert.

Der überhitzte Wasserdampf wird aus der Dampfüberhitzungseinheit 15 über die Zuführleitung 16 in die Dampfzuführeinheit 17 und dort insbesondere in die Dampfsonde 32 geleitet und über die Dampfabgabeöffnungen 33 in den Endabschnitten 36 an die Lebensmittel in dem Gefäß 2 abgegeben. Gleichzeitig erfolgt eine Rührbewegung der Dampfsonde 32 durch eine von dem Dampfsonden-Drehantrieb 54 verursachte Drehbewegung der Dampfsonde 32 um die Hubachse 40. Die exzentrisch zur Rohrlängsachse 37 angeordneten Endabschnitte 36 wirken wie Rührelemente. Durch das mechanische Verrühren der Lebensmittel mittels der Dampfsonde 32 einerseits und der gleichzeitigen Dampfzufuhr über die Dampfabgabeöffnungen 33 ist eine homogene und gleichmäßige Vermischung der Lebensmittel garantiert. Dadurch, dass der überhitzte Dampf vergleichsweise trocken ist, ist ein unbeabsichtigtes Aufweichen und/oder Verwässern der Speisen ausgeschlossen. Die Qualität der so aufbereiteten Speisen ist verbessert.

Nach der erfolgten Dampfzufuhr wird die Drehbewegung der Dampfsonde 32 beendet, die Dampfsonde 32 mittels des Dampfsonden-Hubantriebs aus der Lebensmittelaufbereitungsposition gemäß Fig. 4 und 5 in die Vorbereitungsposition gemäß Fig. 3 linear nach oben verlagert. Anschließend wird das Gefäß 2 mit den aufbereiteten Lebensmitteln in die in Fig. 1 gezeigte Abgabe-/Entnahmeposition verlagert. In der Abgabe-/Entnahmeposition ist das Gefäß außerhalb der Einhausung 31 angeordnet.

Es kann vorteilhaft sein, wenn vor der Zubereitung der Lebensmittel der Inhalt des Gefäßes 2, also die zuzubereitenden Lebensmittel, erfasst werden. Dazu kann beispielsweise an einer Unterseite des Gefäßes 2 ein Identifizierungscode, beispielsweise in Form eines zweidimensionalen Strichcodes oder eines dreidimensionalen, sogenannten Quick Response- oder QR-Codes, vorgesehen sein. Der Identifizierungscode ist insbesondere der EAN-Code, der auf dem Produkt ohnehin bereits vorgesehen ist. Eine zusätzliche Kennzeichnung ist entbehrlich.

Entsprechend ist in der Vorrichtung 1 eine korrespondierende Leseeinheit vorgesehen, die den Identifizierungscode erfasst und die damit verknüpften Daten an die Steuereinheit der Vorrichtung 1 übermittelt. Auf Basis der so übermittelten Informationen kann ein nachfolgender Bedampfungszyklus, insbesondere Temperatur, Druck und Menge des zugegebenen Wasserdampfes veränderlich festgelegt werden. Dazu können vorbereitete Zubereitungs-Datensätze in der Steuereinheit hinterlegt sein und anschließend programmgesteuert zur Zubereitung der Lebensmittel abgerufen werden. Zu den Datensätzen kann auch die Drehgeschwindigkeit und/oder Anzahl der Drehungen variiert werden.

Der Identifizierungscode kann auch dazu genutzt werden, dass ausgeschlossen ist, dass ein nicht vorgesehenes Gericht mittels der Vorrichtung 1 aufbereitet wird. Der Identifizierungscode ermöglicht eine Sicherheitsabfrage. Das Risiko einer Fehlbedienung ist reduziert.

Es ist denkbar, dass an die Dampfüberhitzungseinheit 15 mehr als eine Dampfzuführeinheit 17 angeschlossen ist. Beispielsweise können zwei oder mehr Dampfzuführeinheiten 17 mit der Dampfüberhitzungseinheit 15 über entsprechende Leitungen angeschlossen sein.

In regelmäßigen Zeitabständen und/oder nach Bedarf ist es möglich, den Kesselbehälter 13 der Dampferzeugungseinheit 11 abzuschlammen. Beim Abschlammen des Kesselbehälters 13 werden Schwebeteile nach außen abgeführt, um einen dauerhaft störungsfreien Betrieb der Vorrichtung 1 zu gewährleisten. Dazu dient das Entschlammungsventil 25, das bei Bedarf, also während des Abschlammens, geöffnet werden kann.

In regelmäßigen Zeitabständen und/oder in Abhängigkeit aufbereiteter Lebensmittelportionen und/oder bei einem Produktwechsel erfolgt eine Reinigung der Dampfsonde 32 und der daran befestigten Gefäßabdeckung 62.

Dadurch, dass der Dampfsonden-Hubantrieb 39 unabhängig von dem Dampfsonden-Drehantrieb 54 ausgeführt ist, ist eine unabhängige Bewegungskette für die Dampfsonde 32 möglich. Es ist beispielsweise möglich, die Hubbewegung und Drehbewegung sequentiell durchzuführen. Es ist auch denkbar, die beiden Bewegungen zu überlagern, so dass während der Linearbewegung der Dampfsonde 32 eine Drehbewegung der Dampfsonde 32 durchgeführt wird.

Für eine Reinigung der Dampfsonde 32 mit der Gefäßabdeckung 62 wird die Dampfsonde 32 ausgehend von der in Fig. 3 gezeigten Vorbereitungsposition eine untere Reinigungsposition verlagert. In der unteren Reinigungsposition ist die Dampfsonde 32 mit der Gefäßabdeckung 62 derart an dem Reinigungsbecken 68 der Reinigungseinheit 10 angeordnet, dass die Gefäßabdeckung 62 das Reinigungsbecken 68 dampfdicht abschließt. In dieser abdichtenden Anordnung wird über den Reinigungs-Sprühkopf 9 Dampf gegen die Dampfsonde 32, insbesondere die Endabschnitte 36, sowie gegen die Innenseite der Gefäßabdeckung 62 gesprüht. Der Reinigungs-Kopf 9 ist an einem Ende eines Reinigungszuführkanals 82 angeordnet. Der Reinigungszuführkanal ist gegenüber der Vertikalen mit einem von 0 verschiedenen Neigungswinkel angeordnet. Der Neigungswinkel beträgt insbesondere zwischen 20 ° und 70 °, insbesondere zwischen 45 ° und 70 °, und insbesondere zwischen 65 ° und 70 °, und insbesondere 67 °. Der Reinigungs-Sprühkopf ist als Reinigungsdüse ausgeführt und insbesondere auf den Reinigungszuführkanal 82 aufgeschraubt. Der Reinigungs-Sprühkopf 9 weist eine Düsenöffnung in der Form einer Vollkegelsprühdüse auf. Mit dem Reinigungs-Sprühkopf 9 ist eine Reinigungsbesprühung von unten nach schräg oben möglich.

Zusätzlich zu der Dampfzuführung über den Reinigungs-Sprühkopf 9 erfolgt eine Dampfzuführung über die Dampfsonde 32 selbst. Schmutzwasser kann über die Abflussöffnung 69, das Rohr 70 und den Siphon 71 abfließen.

Durch die Kombination aus Dampf und Wasser während der Reinigung sowie der gegensätzlichen Sprührichtungen aus der Dampfsonde 32 und dem Reinigungs-Sprühkopf 9 ist eine zuverlässige und gründliche Reinigung der Dampfsonde 32 und der Gefäßabdeckung 62 gewährleistet. Nach der Reinigung sind die gereinigten Oberflächen steril. Die Oberflächen sind sauber.

## Patentansprüche

1. Vorrichtung zum Aufbereiten von in einem Gefäß angeordneten Lebensmitteln umfassend
a. eine Dampferzeugungseinheit (11) zum Erzeugen von Dampf,
b. eine mit der Dampferzeugungseinheit (11) verbundene Dampfzuführeinheit (17) zum Zuführen von Dampf in das Gefäß (2), wobei die Dampfzuführeinheit (17) aufweist
i. eine mindestens eine Dampfabgabeöffnung (33) aufweisende Dampfsonde (32),
ii. einen Dampfsonden-Hubantrieb (39) für eine Hubbewegung der Dampfsonde (32) entlang einer Hubachse (40),
**gekennzeichnet durch**
c. einen Dampfsonden-Drehantrieb (54) für eine Drehbewegung der Dampfsonde (32) um die Hubachse (40).

2. Vorrichtung gemäß Anspruch 1, **gekennzeichnet durch** mehrere Dampfabgabeöffnungen (33), wobei insbesondere eine erste Dampfabgabeöffnung in einer ersten, senkrecht zur Hubachse (40) orientierten Ebene angeordnet ist, wobei eine zweite Dampfabgabeöffnung in einer zweiten, senkrecht zur Hubachse (40) orientierten Ebene angeordnet ist, und wobei die erste Ebene und die zweite Ebene entlang der Hubachse (40) beabstandet zueinander angeordnet sind.

3. Vorrichtung gemäß einem der vorstehenden Ansprüche, **dadurch gekennzeichnet, dass** die Dampfsonde (32) mehrere, insbesondere vier, freie Endabschnitte (36) aufweist, wobei jeder Endabschnitt (36) mindestens eine Dampfabgabeöffnung (33) aufweist, wobei insbesondere mindestens zwei Endabschnitte (36) unterschiedliche Längen (L₁, L₂) aufweisen.

4. Vorrichtung gemäß einem der vorstehenden Ansprüche, **gekennzeichnet durch** eine an der Dampfsonde (32) befestigte Gefäßabdeckung (62) zum abdichtenden Anliegen an dem Gefäß (2) während der Dampfzuführung.

5. Vorrichtung gemäß einem der vorstehenden Ansprüche, **gekennzeichnet durch** eine Gefäß-Halteeinheit (21), die insbesondere einen Gefäß-Verlagerungsantrieb aufweist.

6. Vorrichtung gemäß einem der vorstehenden Ansprüche, **gekennzeichnet durch** eine Reinigungseinheit (10) zum Reinigen der Dampfzuführeinheit (17).

7. Vorrichtung gemäß Anspruch 6, **dadurch gekennzeichnet, dass** die Reinigungseinheit (10) ein Reinigungsbecken (68) und einen Reinigungs-Sprühkopf (9) aufweist.

8. Vorrichtung gemäß Anspruch 7, **dadurch gekennzeichnet, dass** die Gefäßabdeckung (62) an dem Reinigungsbecken (68) in einer Reinigungsposition abdichtend anliegt.

9. Vorrichtung gemäß einem der vorstehenden Ansprüche, **gekennzeichnet durch** eine mit der Dampferzeugungseinheit (11) verbundene Dampfüberhitzungseinheit (15) zum Überhitzen des in der Dampferzeugungseinheit (11) erzeugten Dampfes.

10. Vorrichtung gemäß einem der vorstehenden Ansprüche, **gekennzeichnet durch** eine Wasserenthärtereinheit (6).

11. Vorrichtung gemäß einem der vorstehenden Ansprüche, **gekennzeichnet durch** ein Rohrdrehgelenk (20) zur drehbaren Kopplung der Dampfsonde (32) mit einer Zuführleitung (16).

12. Verfahren zum Aufbereiten von in einem Gefäß angeordneten Lebensmitteln umfassend die Verfahrensschritte
- Bereitstellen einer Vorrichtung (1) gemäß einem der vorstehenden Ansprüche,
- Bereitstellen der Lebensmittel in dem Gefäß (2),
- Verlagern der Dampfsonde (32) entlang der Hubachse (40) bis mindestens eine Dampfabgabeöffnung (33) in das Lebensmittel eingetaucht ist,
- Zuführen von Dampf,
- Entfernen der Dampfsonde (32) aus dem Lebensmittel,
**gekennzeichnet durch** ein Drehen der Dampfsonde (32) während der Dampfzuführung.

13. Verfahren gemäß Anspruch 12, **gekennzeichnet durch** ein Überhitzen des Dampfes vor der Dampfzuführung.

## Claims

1. Device for processing food items arranged in a vessel, comprising
a. a steam-generating unit (11) for generating steam,
b. a steam supply unit (17), which is connected to the steam-generating unit (11), for supplying steam to the vessel (2), wherein the steam supply unit (17) has
i. a steam probe (32) having at least one steam-dispensing opening (33),
ii. a steam probe stroke drive (39) for a stroke movement of the steam probe (32) along a stroke axis (40),
**characterized by**
c. a steam probe rotational drive (54) for a rotational movement of the steam probe (32) about the stroke axis (40).

2. Device according to Claim 1, **characterized by** a plurality of steam-dispensing openings (33), wherein in particular a first steam-dispensing opening is arranged in a first plane oriented perpendicularly to the stroke axis (40), wherein a second steam-dispensing opening is arranged in a second plane oriented perpendicularly to the stroke axis (40), and wherein the first plane and the second plane are arranged spaced apart from each other along the stroke axis (40).

3. Device according to either of the preceding claims, **characterized in that** the steam probe (32) has a plurality of free end portions (36), in particular four free end portions, wherein each end portion (36) has at least one steam-dispensing opening (33), wherein in particular at least two end portions (36) have different lengths (L₁, L₂).

4. Device according to one of the preceding claims, **characterized by** a vessel covering (62), which is fastened to the steam probe (32), for lying in a sealing manner against the vessel (2) during the supply of steam.

5. Device according to one of the preceding claims, **characterized by** a vessel-holding unit (21) which in particular has a vessel-shifting drive.

6. Device according to one of the preceding claims, **characterized by** a cleaning unit (10) for cleaning the steam supply unit (17).

7. Device according to Claim 6, **characterized in that** the cleaning unit (10) has a cleaning bowl (68) and a cleaning spray head (9).

8. Device according to Claim 7, **characterized in that** the vessel covering (62) lies in a sealing manner against the cleaning bowl (68) in a cleaning position.

9. Device according to one of the preceding claims, **characterized by** a steam-superheating unit (15), which is connected to the steam-generating unit (11), for superheating the steam generated in the steam-generating unit (11).

10. Device according to one of the preceding claims, **characterized by** a water-softening unit (6).

11. Device according to one of the preceding claims, **characterized by** a swivel joint (20) for the rotatable coupling of the steam probe (32) to a supply line (16).

12. Method for processing food items arranged in a vessel, comprising the following method steps
- providing a device (1) according to one of the preceding claims,
- providing the food items in the vessel (2),
- shifting the steam probe (32) along the stroke axis (40) until at least one steam-dispensing opening (33) is submerged into the food item,
- supplying steam,
- removing the steam probe (32) from the food item,
**characterized by** rotation of the steam probe (32) during the supply of steam.

13. Method according to Claim 12, **characterized by** superheating of the steam before the steam is supplied.

## Revendications

1. Dispositif de préparation d'aliments disposés dans un récipient, comprenant
a. une unité de production de vapeur (11) conçue pour produire de la vapeur,
b. une unité d'alimentation en vapeur (17) reliée à l'unité de production de vapeur (11) pour délivrer de la vapeur audit récipient (2), ladite unité d'alimentation en vapeur (17) comprenant
i. une sonde à vapeur (32) ayant au moins un orifice de distribution de vapeur (33),
ii. un entraînement de levage de sonde à vapeur (39) destiné au mouvement de levage de la sonde à vapeur (32) le long d'un axe de levage (40),
**caractérisé par**
c. un entraînement rotatif de sonde à vapeur (54) destiné au mouvement rotatif de la sonde à vapeur (32) autour de l'axe de levage (40).

2. Dispositif selon la revendication 1, **caractérisé par** une pluralité d'orifices de distribution de vapeur (33), un premier orifice de distribution de vapeur en particulier étant disposé dans un premier plan orienté perpendiculairement à l'axe de levage (40), un second orifice de distribution de vapeur étant disposé dans un second plan orienté perpendiculairement à l'axe de levage (40), et le premier plan et le second plan étant disposés de manière espacée l'un de l'autre le long de l'axe de levage (40).

3. Dispositif selon l'une des revendications précédentes, **caractérisé en ce que** la sonde à vapeur (32) présente plusieurs, en particulier quatre parties d'extrémité libres (36), chaque partie d'extrémité (36) présentant au moins un orifice de distribution de vapeur (33), au moins deux parties d'extrémité (36) en particulier ayant des longueurs différentes (L₁, L₂).

4. Dispositif selon l'une des revendications précédentes, **caractérisé par** un couvercle de récipient (62) fixé à la sonde à vapeur (32) pour être en contact étanche avec le récipient (2) pendant l'alimentation en vapeur.

5. Dispositif selon l'une des revendications précédentes, **caractérisé par** une unité de maintien de récipient (21) qui présente en particulier un entraînement de déplacement de récipient.

6. Dispositif selon l'une quelconque des revendications précédentes, **caractérisé par** une unité de nettoyage (10) pour le nettoyage de l'unité d'alimentation en vapeur (17).

7. Dispositif selon la revendication 6, **caractérisé en ce que** l'unité de nettoyage (10) comprend un bac de nettoyage (68) et une tête de pulvérisation de nettoyage (9).

8. Dispositif selon la revendication 7, **caractérisé en ce que** le couvercle de récipient (62) repose de manière étanche sur le bac de nettoyage (68) dans une position de nettoyage.

9. Dispositif selon l'une des revendications précédentes, **caractérisé par** une unité de surchauffe de vapeur (15) reliée à l'unité de production de vapeur (11) pour le surchauffage de la vapeur produite dans l'unité de production de vapeur (11).

10. Dispositif selon l'une des revendications précédentes, **caractérisé par** une unité d'adoucisseur d'eau (6).

11. Dispositif selon l'une des revendications précédentes, **caractérisé par** un raccord oscillant (20) pour le couplage en rotation la sonde de vapeur (32) à une conduite d'alimentation (16).

12. Procédé de préparation d'aliments disposés dans un récipient, comprenant les étapes de procédé de
- fourniture d'un dispositif (1) selon l'une des revendications précédentes,
- fourniture des aliments dans le récipient (2),
- déplacement de la sonde à vapeur (32) le long de l'axe de levage (40) jusqu'à ce qu'au moins un orifice de distribution de vapeur (33) soit immergé dans l'aliment,
- distribution de vapeur,
- retrait de la sonde à vapeur (32) de l'aliment,
**caractérisé par** une mise en rotation de la sonde à vapeur (32) pendant l'alimentation en vapeur.

13. Procédé selon la revendication 12, **caractérisé en ce qu'il** consiste à surchauffer la vapeur avant l'alimentation en vapeur.
